# EUROPEAN PATENT APPLICATION

(11) **EP 2 594 541 A2**
(43) Date of publication of application: **22.05.2013**
(21) Application number: 11806974.9
(22) Date of filing: 14.06.2011
(51) Int. Cl.: C04B 18/00, C04B 26/02, C04B 24/24

(54) **ARTIFICIAL MARBLE INCLUDING PLATE-SHAPED CHIPS OF WASTE GLASS, AND METHOD FOR FABRICATING SAME**

(30) Priority: 15.07.2010 KR 20100068673
(71) Applicant: LG Hausys, Ltd., Seoul 150-721 (KR)
(72) Inventor: KIM, Hang-Young, Cheongju-si Chungcheongbuk-do 361-758 (KR); KIM, Seok-Gyun, Cheongju-si Chungcheongbuk-do 361-300 (KR)
(74) Representative: Zacco Denmark A/S
(86) International application number: PCT/KR2011/004355
(87) International publication number: WO 2012/008689

(57) **Abstract**

The present invention relates to artificial marble including chips of plate-shaped waste glass and a method for fabricating the same. The method includes preparing chips of plate-shaped waste glass having a thickness of 0.6 mm or less and a large diameter of 20 mm or less using thin plate glass as a waste product generated in production of an LCD backlight unit, and adding the chips to a base compound including at least one polymer resin and an additive. The prepared artificial marble has an outer appearance similar to that of natural stone, a surface having excellent properties, and optimum characteristics when used as an interior material for floors, walls, kitchens, and the like.

## Description

### [Technical Field]

The present invention relates to artificial marble containing chips of plate-shaped waste glass and a method for fabricating the same, and more particularly, to a technology for manufacturing artificial marble which uses a large amount of chips of plate-shaped waste glass unlike artificial marble having an artificial appearance, thereby providing excellent surface properties and a wide range of application, while exhibiting a natural outer appearance similar to that of natural stone.

### [Background Art]

Artificial marble is lighter than natural marble and is widely applicable to flooring materials, wall materials, tables, kitchens, plates, sinks, and the like, as a replacement for natural marble capable of realizing various exterior appearances.

Such artificial marble requires good aesthetics and a high-class texture similar to that of natural stone. Thus, it is important that the artificial marble exhibit a texture as close to that of natural stone as possible.

Artificial marble in the related art is mainly manufactured using an acrylic resin. The acrylic resin artificial marble is manufactured by mixing a pigment, an accelerator, and other additives with a compound, which is obtained by mixing polymethyl methacrylate (PMMA) with a monomer such as methyl methacrylate, injecting the mixture into a mold, and hardening the injected mixture.

Here, PMMA chips are generally used for expressing an outer appearance. That is, a PMMA flat plate is prepared and cut into various sizes to manufacture chips, which are in turn mixed with an acrylic resin.

Such general artificial marble provides a hard and cold texture due to the use of a metallic material.

Further, the artificial marble fails to provide a clear outer appearance and satisfactory surface properties, thereby showing a limit in satisfying characteristics of artificial marble.

### [Disclosure]

### [Technical Problem]

An aspect of the present invention is to provide a method of manufacturing artificial marble using chips of plate-shaped waste glass having an average diameter of 20 mm or less, which are prepared from thin plate glass having a thickness of 0.6 mm or less obtained from a waste material generated in production of an LCD backlight unit, whereby the artificial marble has excellent properties and an outer appearance similar to those of natural stone. Another aspect of the present invention is to provide eco-friendly artificial marble manufactured by recycling glass for an LCD backlight unit through the aforementioned manufacturing method.

### [Technical Solution]

One aspect of the present invention provides artificial marble including: a base compound composed of a polymer resin and an additive; and chips of plate-shaped waste glass, wherein the chips of plate-shaped waste glass are prepared by crushing waste glass having a thickness of 0.6 mm or less.

The artificial marble may contain 300 to 600 parts by weight of the chips of plate-shaped waste glass based on 100 parts by weight of the base compound. The chips of plate-shaped waste glass may be prepared by crushing glass for an LCD backlight unit (LCD BLU); the chips of plate-shaped waste glass may have an average particle diameter of 20 mm or less; and pearl powder may be coated on surfaces of the chips of plate-shaped waste glass.

The pearl powder may include at least one of natural pearl, synthetic pearl, and metal pearl; the polymer resin may include at least one selected from the group consisting of acryl resins, epoxy resins, melamine resins, and unsaturated polyester resins; and the additive may include at least one of a pigment, an enhancer, a polymerization initiator, and a cross-linking agent. The cross-linking agent may be an acrylic polyfunctional monomer having a copolymerizable double bond in a molecule and cross-linked to a double bond in a binder backbone, and may include at least one selected from the group consisting of ethylene glycol dimethacrylate (EDMA), diethylene glycol dimethacrylate (2EDMA), triethylene glycol dimethacrylate (3EDMA), tetraethylene glycol dimethacrylate (4EDMA), trimethylolpropane trimethacrylate (TMPMA), 1,6-hexanediol dimethacrylate, polybutylene glycol dimethacrylate, neopentyl glycol dimethacrylate, and a combination thereof, or a styrene-based monomer.

The artificial marble may further include a surface treatment layer.

Another aspect of the present invention provides a method of manufacturing artificial marble, which includes: (a) crushing thin plate waste glass to form chips of plate-shaped waste glass; (b) mixing the chips of plate-shaped waste glass with a base compound comprising a polymer resin and an additive; (c) injecting the base compound mixed with the chips of plate-shaped waste glass into a mold and thus molding the base compound; and (d) hardening the base compound into the shape of the mold.

The chips of plate-shaped waste glass have a thickness of 0.6 mm or less and an average particle diameter of 20 mm or less; and in step (b), the base compound may be mixed with at least one of natural stone chips, glass chips, and mirror chips.

Step (b) may include: (b-1) mixing at least one of natural pearl, synthetic pearl, and metal pearl, and an additive with the chips of thin plate waste glass; (b-2) mixing a polymer resin with the mixture of (b-1); and (b-3) mixing inorganic powder with the mixture of (b-2).

The formation in step (c) may be performed by a vacuum compression pressing process; and the method may further include (e) surface-treating the artificial marble.

### [Advantageous Effects]

According to the present invention, unlike artificial marble in the related art, since chips of plate-shaped waste glass, particularly, chips of thin plate glass having a thickness of 0.6 mm or less, are used, tempered glass for a backlight unit as one form of LED waste may be recycled, thereby making it possible to reduce manufacturing costs while preventing environmental contamination and achieving high hardness characteristics.

In addition, according to the present invention, chips having large particle diameters of 20 mm or less may be easily manufactured using thin plate glass having a thickness of 0.6 mm or less, and an effect of obtaining an outer appearance close to that of natural stone (in particular, pearl) which cannot be realized by existing silica based artificial marble may be achieved using large diameter chips.

Further, the artificial marble according to the present invention may achieve a texture effect of natural stone, and thus may be applied to various product groups such as home appliances, furniture, and interior wall bodies.

### [Description of Drawing]

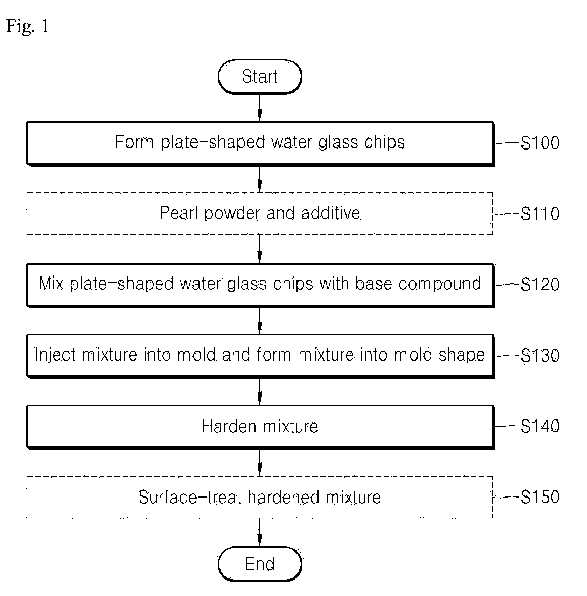

Fig. 1 is a flowchart of a method of manufacturing artificial marble including chips of plate-shaped waste glass according to one exemplary embodiment of the present invention.

### [Best Mode]

The above and other aspects, features, and advantages of the invention will become apparent from the detailed description of the following embodiments in conjunction with the accompanying drawings. It should be understood that the present invention is not limited to the following embodiments and may be embodied in different ways, and that the embodiments are provided to provide complete disclosure of the invention and a thorough understanding of the invention to those skilled in the art. The scope of the invention is defined only by the claims. Like components will be denoted by like reference numerals throughout the specification.

Hereinafter, artificial marble including plate-shaped waster glass chips and a method for fabricating the same according to embodiments of the present invention will be described in detail with reference to the accompanying drawings.

In the artificial marble according to the present invention, chips of plate-shaped waste glass are added to a base compound for manufacturing artificial marble composed of at least one polymer resin and an additive to realize a transparent and natural marble surface.

The artificial marble may contain 300 to 600 parts by weight of the chips of plate-shaped waste glass based on 100 parts by weight of the base compound. When the amount of the chips of plate-shaped waste glass is less than 300 parts by weight, a surface effect cannot be obtained, and when the amount of the chips of plate-shaped waste glass exceeds 600 parts by weight, breakage can frequently occur in a mixing process. Further, since spaces between chips increase and uniform spaces are not attained, the space cannot be sufficiently filled with a binder, so that pin holes are formed on the surface of the product and unfilled parts are often formed, thereby making it difficult to form a desired marble shape.

Next, when the chips of plate-shaped waste glass have an average particle diameter of 20 mm or less and a thickness of 0.6 mm or less, the artificial marble may have an excellent appearance.

Here, any type of chips may be used so long as the chips of plate-shaped waste glass have the average particle diameter and thickness as described above.

At this time, thin plate glass having a thickness of 0.6 mm or less is mainly used in an LCD backlight unit.

Recently, CRT monitors have been rapidly replaced by LCD monitors and the number of discarded LCD backlight units is rapidly increasing.

Thus, in the present invention, as waste glass used in the LCD backlight unit can be recycled, environmental contamination may be prevented and manufacturing costs for artificial marble may be reduced.

In addition, in general, thin plate glass used for an LCD backlight unit is very transparent due to characteristics thereof, and thin plate glass having a small thickness and a very high strength is used to reduce overall weight.

Thus, when chips of plate-shaped waste glass are prepared using thin plate glass used for such an LCD backlight unit, the artificial marble may have high hardness and provides an appealing outer appearance through excellent transparency.

Most existing mirrors or general glass cullet has an average particle diameter below 8 mm. As a result, glass cullet is jammed between an impeller and a mixer for mixing raw materials, thereby making it difficult to smoothly mixing the raw materials. Thus, the effect of glass addition is significantly deteriorated, and in most cases, it is impossible to obtain a natural marble pattern.

On the contrary, when the thin plate glass having a thickness of 0.6 mm according to the present invention are crushed, plate-shaped cullet having an average diameter of 20 mm is mainly formed, making it possible to optimize a natural marble pattern effect having a transparent and appealing outer appearance.

That is, when a large amount of thin plate-shaped chips is added instead of spherical particles, it becomes advantageous to form plate-shaped cullet with pressed internal structure, thereby providing a more stable state to the formed product.

Thus, when the chips of plate-shaped waste glass according to the present invention are used, the formed product may have a denser structure and improved physical characteristics. Then, in order to maximize these effects, cullet prepared by crushing general glass and mirrors may be further added to the chips of plate-shaped waste glass of the present invention.

The chips of plate-shaped waste glass are mixed with the base compound, and when the chips of plate-shaped waste glass according to the present invention has an average particle diameter exceeding 20 mm, it can be difficult to mix the base compound with the chips to form a marble pattern. That is, since the chips of plate-shaped waste glass can be broken during mixing and a possibility of generating defective products can increase, it is preferable that the average particle diameter of the chips of plate-shaped waste glass be within the range defined in the present invention.

The composition of the base compound of the artificial marble is not particularly limited.

According to the present invention, the base compound may be selected from any compound, which can be applied to acrylic artificial marble, unsaturated polyester artificial marble, and epoxy artificial marble, and other artificial marble well known in the art, without being limited thereto.

For example, the base compound may include at least one selected from the group consisting of acrylic resins, unsaturated polyester resins, epoxy resins, and melanin resins.

Any acrylic resin may be used without limitation. The acrylic resins may be polymers including at least one acrylic monomer selected from the group consisting of methyl (meth)acrylate, ethyl (meth)acrylate, butyl (meth)acrylate, 2-ethylhexyl (meth)acrylate, benzyl (meth)acrylate, and glycidyl (meth)acrylate, without being limited thereto.

In addition, any unsaturated polyester resins may be used without limitation. For example, the unsaturated polyester resins may be a polyester resin having an acid value of 5 to 40 and an average weight molecular weight of 1000 to 5000, and may be prepared through condensation of α,β-unsaturated dibasic acid or a mixture of the dibasic acid and saturated dibasic acid and polyalcohol.

Further, any epoxy resin may be used without limitation. For example, bifunctional or polyfunctional epoxy resins may be used. Examples of bifunctional or polyfunctional epoxy resins include bisphenol A epoxy resins, bisphenol S epoxy resins, tetraphenyl ethane epoxy resins, and phenol novolac epoxy resins, without being limited thereto.

The additive refers to various well-known additives used for manufacturing artificial marble, such as a polymerization initiator, flow additives.

Any additive may be used without limitation. Examples of additives include at least one of a pigment, an enhancer, a polymerization initiator, and a cross-linking agent. Here, the cross-linking agent is an acrylic polyfunctional monomer having a copolymerizable double bond in a molecule and cross-linked to a double bond in a binder backbone, and may include at least one selected from the group consisting of ethylene glycol dimethacrylate (EDMA), diethylene glycol dimethacrylate (2EDMA), triethylene glycol dimethacrylate (3EDMA), tetraethylene glycol dimethacrylate (4EDMA), trimethylolpropane trimethacrylate (TMPMA), 1,6-hexanediol dimethacrylate, polybutylene glycol dimethacrylate, neopentyl glycol dimethacrylate, and a combination thereof, or a styrene-based monomer. Next, other processed resin chips may be used in addition to the chips of plate-shaped waste glass constituting the artificial marble according to the present invention. For example, at least one chip selected from the group consisting of acrylic resin chips and natural chips may be used.

Thus, any chip generally used in the art may be used as the chips additionally provided to the artificial marble according to the present invention without any limitation. For example, low hardness chips formed of at least one resin composition selected from the group consisting of an acrylic resin, an epoxy resin, an unsaturated polyester resin and a melamine resin may be used as well as high hardness chips prepared using, for example, fragments of natural stone including granite and marble, and fragments of mirrors, glass and quartz.

Further, in the present invention, colored chips having various colors may be manufactured by adding colored material such as pigments or dyes, or by coating or depositing such a colored material on the crushed chips in the process of forming the chips of plate-shaped waste glass.

In particular, in manufacturing colored chips using pearl powder, at least one selected from the group consisting of natural mother-of-pearl, stone, stone powder, quartz, coal, ocher, magnetic powder, clams, pearls, and mirror powder may be contained and synthetic pearls may also be used, without any limitation.

In this invention, when the artificial marble is manufactured using the colored chips, adjacent colored chips may be arranged to provide similar colors. As a result, the artificial marble may exhibit a natural aesthetic appearance.

The artificial marble having a natural marble pattern according to the present invention may further include a surface treatment layer on an upper side thereof.

The surface treatment layer is formed on a cover compound layer in order to improve surface quality such as scratch-resistance or wear-resistance, or to improve contamination resistance to facilitate cleaning. The surface treatment layer may include polyurethane, urethane acrylic resins, silicon modified resins, wax, and the like.

According to the present invention, since the artificial marble realizes a transparent and clear outer appearance using chips of plate-shaped waste glass, it is possible to realize a modern, simple, and future-oriented design.

Further, a coating layer having an appealing high-gloss surface may be formed by further forming a surface treatment layer, and a method of manufacturing this type of artificial marble will be described in detail hereinafter.

Fig. 1 is a flowchart of a method of manufacturing artificial marble including chips of plate-shaped waste glass according to one embodiment of the present invention.

Referring to Fig. 1, the method includes crushing thin plate waste glass to form chips of plate-shaped waste glass (S100), mixing the chips of plate-shaped waste glass with a base compound composed of a polymer resin and an additive (S120), injecting the base compound mixed with the chips of plate-shaped waste glass into a mold and thus molding the base compound to form a shape corresponding to the shape of the mold (S 130); and hardening the base compound into the shape of the mold (S 140).

Formation of the mold shape using the mold is performed by a vacuum compression pressing process, and the method further includes surface-treating the artificial marble (S 150).

In addition, in mixing of the chips of plate-shaped waste glass with the base compound (S120), at least one of natural stone chips, glass chips, and mirror chips may be mixed with the base compound, and a detailed process is as follows.

First, at least one of natural pearls, synthetic pearls, and metal pearls and an additive is mixed with the chips of thin plate waste glass (S110) and then it is confirmed whether pearl or metal powder is uniformly applied to the surfaces of chips. Then, a polymer resin may be mixed with the mixture.

Next, after it is confirmed whether the polymer resin is sufficiently applied to the surfaces of chips, inorganic powder may be further mixed therewith. Then, the inorganic powder may include at least one selected from among stones, stone powder, quartz, coal, ocher, and magnetic powder.

When it is not confirmed that the polymer resin is sufficiently applied thereto, mixing cannot be normally performed, and side effects such as generation of bubbles on an interface of the added material and the compound can be generated.

Further, in order to facilitate formation of a desired marble pattern and to allow the artificial marble to provide a natural appearance by suppressing generation of bubbles, the artificial marble may be formed through vacuum pressing.

Any hardening process known in the art may be used without limitation. For example, in the present invention, hardening may be performed while maintaining the mold at an inner temperature in the range from room temperature to 100°C.

The hardening temperature may be properly changed according to a desired thickness of the compound layer or the amount of the base compound used. Next, the artificial marble according to the present invention may be subjected to surface treatment to improve surface quality such as scratch resistance, wear resistance, or contamination resistance.

As described above, since the artificial marble according to the present invention uses chips of plate-shaped waste glass unlike existing artificial marble, in particular, thin plate glass having a thickness of 0.6 mm, recycling of a backlight unit as one form of LCD waste can be achieved.

Thus, the present invention may reduce manufacturing costs and ensure high hardness without environmental contamination.

In addition, since the artificial marble according to the present invention uses thin plate glass having a thickness of 0.6 mm, chips having a large diameter of 20 mm or less can be used, thereby providing an outer appearance and physical characteristics close to those of natural marble.

Thus, the artificial marble according to the present invention may be widely applied to various product groups such as home appliances, furniture, and interior wall bodies.

Although some embodiments have been described with reference to the accompanying drawing, it will be understood by those skilled in the art that these embodiments are provided for illustrative purposes only, and various modifications, changes, alterations and equivalent embodiments can be made without departing from the scope of the present invention. Therefore, the scope and sprit of the present invention should be defined only by the accompanying claims and equivalents thereof.

## Claims

1. Artificial marble comprising:
a base compound composed of a polymer resin and an additive; and
chips of plate-shaped waste glass,
wherein the chips of plate-shaped waste glass are prepared by crushing waste glass having a thickness of 0.6 mm or less.

2. The artificial marble according to claim 1, wherein the artificial marble contains 300 to 600 parts by weight of the chips of plate-shaped waste glass based on 100 parts by weight of the base compound.

3. The artificial marble according to claim 1, wherein the chips of plate-shaped waste glass are prepared by crushing glass for an LCD backlight unit (LCD BLU).

4. The artificial marble according to claim 1, wherein the chips of plate-shaped waste glass have an average particle diameter of 20 mm or less.

5. The artificial marble according to claim 1, wherein pearl powder is coated on surfaces of the chips of plate-shaped waste glass.

6. The artificial marble according to claim 5, wherein the pearl powder comprises at least one of natural pearl, synthetic pearl, and metal pearl.

7. The artificial marble according to claim 1, wherein the polymer resin comprises at least one selected from the group consisting of acryl resins, epoxy resins, melamine resins, and unsaturated polyester resins.

8. The artificial marble according to claim 1, wherein the additive comprises at least one of a pigment, an enhancer, a polymerization initiator, and a cross-linking agent.

9. The artificial marble according to claim 8, wherein the cross-linking agent is an acrylic polyfunctional monomer having a copolymerizable double bond in a molecule and cross-linked to a double bond in a binder backbone, and comprises at least one selected from the group consisting of ethylene glycol dimethacrylate (EDMA), diethylene glycol dimethacrylate (2EDMA), triethylene glycol dimethacrylate (3EDMA), tetraethylene glycol dimethacrylate (4EDMA), trimethylolpropane trimethacrylate (TMPMA), 1,6-hexanediol dimethacrylate, polybutylene glycol dimethacrylate, neopentyl glycol dimethacrylate and a combination thereof, or a styrene-based monomer.

10. The artificial marble according to claim 1, wherein the artificial marble further comprises a surface treatment layer.

11. A method of manufacturing artificial marble, the method comprising:
(a) crushing thin plate waste glass to form chips of plate-shaped waste glass;
(b) mixing the chips of plate-shaped waste glass with a base compound comprising a polymer resin and an additive;
(c) injecting the base compound mixed with the chips of plate-shaped waste glass into a mold and molding the base compound; and
(d) hardening the base compound into the shape of the mold.

12. The method according to claim 11, wherein the chips of plate-shaped waste glass have a thickness of 0.6 mm or less and an average particle diameter of 20 mm or less.

13. The method according to claim 11, wherein, in step (b), the base compound is mixed with at least one of natural stone chips, glass chips, and mirror chips.

14. The method according to claim 11, wherein step (b) comprises:
(b-1) mixing at least one of natural pearl, synthetic pearl and metal pearl, and an additive with the chips of thin plate waste glass;
(b-2) mixing a polymer resin with the mixture of (b-1); and
(b-3) mixing inorganic powder with the mixture of (b-2).

15. The method according to claim 11, wherein the formation in step (c) is performed by a vacuum compression pressing process.

16. The method according to claim 11, further comprising: (e) surface-treating the artificial marble.
